**Europäisches Patentamt**

**European Patent Office**

**Office européen des brevets**

(19)

(11) Veröffentlichungsnummer: **0 283 945 B1**

(12) **EUROPÄISCHE PATENTSCHRIFT**

(45) Veröffentlichungstag der Patentschrift: **18.12.91**

(51) Int. Cl.5: **H02P 7/63, H02P 7/00**

(21) Anmeldenummer: **88104318.6**

(22) Anmeldetag: **18.03.88**

(54) **Stromversorgungseinrichtung für Elektrowerkzeuge.**

(30) Priorität: **26.03.87 DE 3709983**

(43) Veröffentlichungstag der Anmeldung:
**28.09.88 Patentblatt 88/39**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**WO-A-86/03075**
**DE-A- 3 009 994**
**DE-A- 3 136 694**
**DE-A- 3 247 046**
**GB-A- 2 174 259**

**PATENT ABSTRACTS OF JAPAN, Band 7, nr.
243 (E-207)[1388], 28. Oktober 1983; & JP-
A-58 130 797**

(73) Patentinhaber: **Festo KG
Ruiter Strasse 82
W-7300 Esslingen 1(DE)**

(72) Erfinder: **Stoll, Wilfried, Dr. rer. pol.
Sonnenbergstrasse 51 E
W-7000 Stuttgart(DE)**
Erfinder: **Behrens, Axel, Dipl.-Ing.
Uhlandstrasse 44
W-7306 Denkendorf(DE)**
Erfinder: **Fetzer, Gerhard, Dipl.-Ing.
Mühlhaldenstrasse 25
W-7306 Denkendorf(DE)**
Erfinder: **Berwarth, Walter, Dipl.-Ing.
Staufeneckstrasse 35
W-7300 Esslingen-Zell(DE)**

(74) Vertreter: **Reimold, Otto, Dr. Dipl.-Phys. et al
Patentanwälte Dipl.-Ing. R. Magenbauer
Dipl.-Phys. Dr. O. Reimold Dipl.-Phys.Dr. H.
Vetter Hölderlinweg 58
W-7300 Esslingen(DE)**

EP 0 283 945 B1

## Beschreibung

Die Erfindung betrifft eine Stromversorgungseinrichtung für von einem Asynchronmotor angetriebene Elektrowerkzeuge, mit einem eine gleichgerichtete Wechselspannung in einen Drehstrom variabler Frequenz und Spannungsamplitude umsetzenden, einen Frequenzgenerator enthaltenden Umrichter und mit einem auf den Frequenzgenerator einwirkenden Drehzahl-Stellungsgeber, wobei ein die Motorlast erfassender Lastsensor mit dem Frequenzgenerator bei Überschreitung wenigstens eines, einer Spitzenlast entsprechenden, vorgegebeben Grenzwertes in Wirkverbindung steht.

Als Antrieb für Elektrowerkzeuge, insbesondere Handwerkzeugmaschinen, werden gewöhnlich an die Netzwechselspannung anschließbare Kollektormotoren (Universalmotoren)verwendet. Diese weisen den Nachteil auf, daß ihre Bürsten Funken erzeugen, weshalb ein Betrieb in einer entflammbaren oder explosiven Atmosphäre nicht möglich ist. Weitere Nachteile bestehen darin, daß die Bürsten und der Kommutator einem starken Verschleiß unterworfen sind und daß eine im Vergleich zur Drehzahl und der Last hohe Leerlaufdrehzahl und eine sehr weiche Drehmoment/Drehzahl-Charakteristik vorliegt. Ein Absinken der Drehzahl und der Last verursacht ein Ansteigen des Werkzeugverschleißes und der Bearbeitungszeit sowie qualitativ schlechtere Arbeitsergebnisse.

Weiterhin ist es möglich, zum Antrieb eines Elektrowerkzeugs einen kollektorlosen Asynchronmotor bei einer gegenüber der Netzspannung erhöhten Frequenz von beispielsweise 0 bis 400 Hz zu betreiben. Derartige Asynchronmotoren haben eine steifere und damit günstigere Drehmoment/Drehzahl-Charakteristik d.h., bei ansteigender Motorbelastung bleibt die Drehzahl im wesentlichen konstant. Die Standzeit und die Produktivität wird verbessert. Daneben ergibt sich ein wesentlich günstigeres Verhältnis zwischen Ausgangsleistung und Gewicht bzw. Baugröße, so daß kräftigere, kompaktere Handwerkzeugmaschinen gebaut werden können. Wird ein derartiger Asynchronmotor mit konstanter Frequenz betrieben, so besteht bei Überschreitung einer bestimmten Grenzbelastung die Gefahr einer Überhitzung und eines Abwürgens des Motors.

Um dieser Gefahr zu begegnen, ist eine aus der DE-OS 32 47 046 bekannte Stromversorgungseinrichtung als Regelvorrichtung ausgebildet, durch die die Frequenz und die Spannungsamplitude in Abhängigkeit der Motordrehzahl und der Motorbelastung ständig geregelt wird. Auf diese Weise kann bei Erhöhung der Last durch entsprechendes Nachregeln dieser Größen eine Überhitzung vermieden werden. Steigt schließlich die Motorlast doch über ein vorgebbares Niveau an, so wird ein Teil der Endstufentransistoren abgeschaltet.

Der Nachteil der bekannten Stromversorgungseinrichtung besteht zum einen darin, daß die unabhängige Regelung der beiden Größen Frequenz und Amplitude eine sehr aufwendige und schwierig einzustellende Regelvorrichtung erfordert. Optimierte Arbeitspunkte mit einem definierten Verhältnis dieser Größen sind nur sehr schwer und mit sehr großem Aufwand realisierbar. Das Abschalten eines Teils der Endstufentransistoren bei Erreichen einer Grenzmotorlast führt zu einem unerwünschten Ruck und plötzlichen Absinken der Drehzahl.

Der Erfindung liegt daher die Aufgabe zugrunde, eine Stromversorgungseinrichtung der vorstehend genannten Gattung zu schaffen, durch die sehr genau definierte Arbeitspunkte und eine optimierte Kennlinie der Spannungsamplitude in Abhängigkeit von Frequenz und Drehzahl realisierbar sind und wobei die Gefahr einer Überhitzung ruckfrei durch eine vereinfachte Schaltung verhindert werden kann.

Die Aufgabe wird erfindungsgemäß dadurch gelöst, daß durch die Stellung des Drehzahl-Stellungsgebers definierte, in einer festen Zuordnung zueinander stehende Frequenz- und Spannungsamplitudenwerte nach einer vorgegebenen Kennlinie einstellbar sind und daß, bei Überschreitung des Lastgrenzwertes ein Eingriff der Motorlast über den Lastsenor auf den Arbeitspunkt der Kennlinie im Sinne einer Reduzierung der Frequenz erfolgt.

Im Normalbetrieb, d.h. unterhalb des vorgegebenen Lastgrenzwertes, können die einzelnen Arbeitspunkte der Kennlinie sehr definiert durch den insbesondere als Potentiometer ausgebildeten Drehzahl-Stellungsgeber angewählt werden, so daß zum einen eine schaltungsmäßig sehr einfache Lösung vorliegt und zum anderen jederzeit ein festgelegtes, optimales Verhältnis zwischen Amplitude und Frequenz gewahrt bleibt. Alle Probleme, die bei einer Regelung auftreten können, werden dadurch vermieden. Erst wenn ein oberer Grenzwert erreicht bzw. überschritten wird und die Gefahr einer Überhitzung oder eines Abwürgens des Motors auftreten könnte, greift eine Begrenzungsschaltung weich ein und verschiebt in Abhängigkeit der festgestellten Motorlast den Arbeitspunkt auf der Kennlinie im Sinne einer Reduzierung der Frequenz. Drehmomentstöße können dabei nicht auftreten. Da der Eingriff auf die Kennlinie über die Motorlast nur als Sicherheits-und Begrenzungsschaltung arbeitet, ist eine hohe Regelgenauigkeit nicht erforderlich, so daß auch hier wiederum eine sehr einfache Schaltung verwendet werden kann.

Durch die in den Unteransprüchen aufgeführten Maßnahmen sind vorteilhafte Weiterbildungen und Verbesserungen der im Anspruch 1 angegebenen Stromversorgungseinrichtung möglich.

Zur optimalen Einstellung einander zugeordneter Größen von Frequenz und Amplitude ist dem Frequenzgenerator zweckmäßigerweise ein Funktionsgenerator vorgeschaltet, der eine vorgegebene Funktion der Spannungsamplitude von der Frequenz erzeugt.

Ein weiches ruckfreies Anfahren wird durch einen den Motoranlauf steuernden, insbesondere als Integrator ausgebildeten Rampengenerator gewährleistet, der dem Drehzahl-Stellungsgeber nachgeschaltet ist. Entsprechend der vorgegebenen Rampenfunktion wird die Drehzahl beim Einschalten definiert gesteuert angehoben.

Zur Erkennung des Grenzwertes, ab dem ein Eingriff der Motorlast auf den Arbeitspunkt erfolgen soll, ist zwischen dem Lastsensor und dem Frequenzgenerator wenigstens eine vor Erreichen des Grenzwertes sperrende Schwellwertstufe geschaltet. Diese weist zur kontinuierlichen Verschiebung des Arbeitspunktes in vorteilhafter Weise einen das Signal des Lastsensors mit dem Grenzwert vergleichenden Komparator auf, dessen Ausgang für Signale einer Polarität gesperrt ist. Dadurch wird bei Überschreiten des Grenzwertes bei weiter ansteigender Motorlast der Arbeitspunkt kontinuierlich zurückgenommen, was sich in der Reduzierung der Frequenz auswirkt.

Zweckmäßigerweise ist eine Schwellwertstufe für einen oberen positiven Grenzwert und eine zweite Schwellwertstufe für einen unteren negativen, im Bremsbetrieb erreichbaren Grenzwert vorgesehen. Über eine in Abhängigkeit der Flußrichtung des gleichgerichteten Stroms umschaltende Schaltvorrichtung wird alternativ jeweils eine der beiden Schwellwertstufen gesperrt und die andere kann auf den Frequenzgenerator, insbesondere durch Verknüpfung mit dem Signal des Drehzahl-Stellungsgebers eingreifen. Auf diese Weise ist eine Sicherheit bei Spitzenbelastungen sowohl im motorischen, wie auch im generatorischen Betrieb des Asynchronmotors gewährleistet.

Der als Stromsensor, insbesondere als Widerstand im gleichgerichteten Stromkreis ausgebildete Lastsensor kann dabei sowohl ein lastabhängiges Signal erzeugen, wie auch eine Information darüber, ob ein motorischer oder ein generatorischer Betrieb vorliegt.

Der Grenzwert für die Motorlast kann ein Festwert oder eine Funktion eines Motorparameters sein, beispielsweise der Temperatur, der Art des Asynchronmotors, der Verwendungsweise der Handwerkzeugmaschine od. dgl..

Zwischen die Pole des gleichgerichteten Stromkreises ist in vorteilhafter Weise ein Halbleiterschalter geschaltet, der bei Überschreitung einer vorgegebenen Spannung im generatorischen Betrieb des Asynchronmotors in den stromleitenden Zustand versetzbar ist. Hierdurch kann im generatorischen Betrieb, also im Bremsbetrieb, die vom Motor zurückgespeiste Energie aufgenommen werden und ein gefährliches Ansteigen der generatorisch erzeugten Spannung zum Schutze der Bauteile verhindert werden. Gleichzeitig wird ein schneller Abbremsvorgang ermöglicht. Hierdurch wird in zweckmäßiger Ausgestaltung der Erfindung die Erkennung einer generatorisch erzeugten Spitzenlast ermöglicht und verbessert, andererseits ist die Verwendusng als Bremsvorrichtung auch für andere Arten von Stromversorgungseinrichtungen möglich.

Besonders zweckmäßig ist die Ausbildung als Regelvorrichtung, durch die die Spannung an den Polen des gleichgerichteten Stromkreises auf einen maximalen vorgegebenen Wert durch getaktetes Ansteuern des Halbleiterschalters begrenzt wird.

Ein Ausführungsbeispiel der Erfindung ist in der Zeichnung dargestellt und in der nachfolgenden Beschreibung näher erläutert. Es zeigen:

Fig. 1    eine schaltungsmäßige Darstellung der Stromversorgungseinrichtung,

Fig. 2    ein Signaldiagramm zur Erläuterung der Wirkungsweise und

Fig. 3    eine detailliertere Darstellung der Steuervorrichtung des Umrichters.

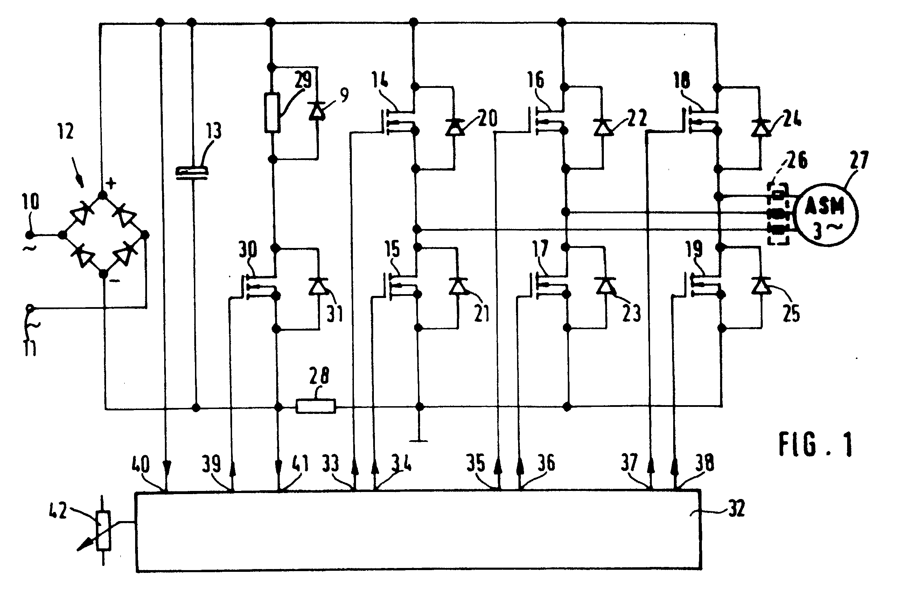

Gemäß dem in Fig. 1 dargestellten Ausführungsbeispiels wird die an den Klemmen 10, 11 anliegende Netz-Wechselspannung von üblicherweise 220 Volt einem Gleichrichter 12 zugeführt, dessen die gleichgerichtete Wechselspannung führenden Anschlüsse mit einem Glättungskondensator 13 verbunden sind. Parallel zu diesem Glättungskondensator 13 liegen drei jeweils aus zwei Leistungstransistoren 14, 15 bzw. 16, 17 bzw. 18, 19 bestehende Reihenschaltungen. Die Schaltstrecken der Leistungstransistoren 14 bis 19 sind jeweils durch Freilaufdioden 20 bis 25 überbrückt. Die Verknüpfungspunkte zwischen den Leistungstransistoren 14 und 15 bzw. 16 und 17 bzw. 18 und 19 sind über eine Steckverbindung 26 an einen kollektorlosen Asynchronmotor 27 angeschlossen. Zwischen den negativen Ausgangsanschluß des Gleichrichters 12 und die Source-Anschlüsse der Transistoren 15, 17, 19, die an Masse liegen, ist ein als Last- bzw. Stromsensor verwendeter Widerstand 28 geschaltet.

Weiterhin ist die Reihenschaltung eines durch eine Freilaufdiode 9 überbrückten Bremswiderstandes 29 mit einem weiteren Leistungstransistor 30, dessen Schaltstrecke ebenfalls durch eine Freilaufdiode 31 überbrückt ist, parallel zum Glättungskondensator 13 geschaltet.

Als Leistungstransistoren 14 bis 19, 30 sind Mosfet-Transistoren verwendet. Selbstverständlich können auch andere Arten von Halbleiterschaltern hier vorgesehen sein.

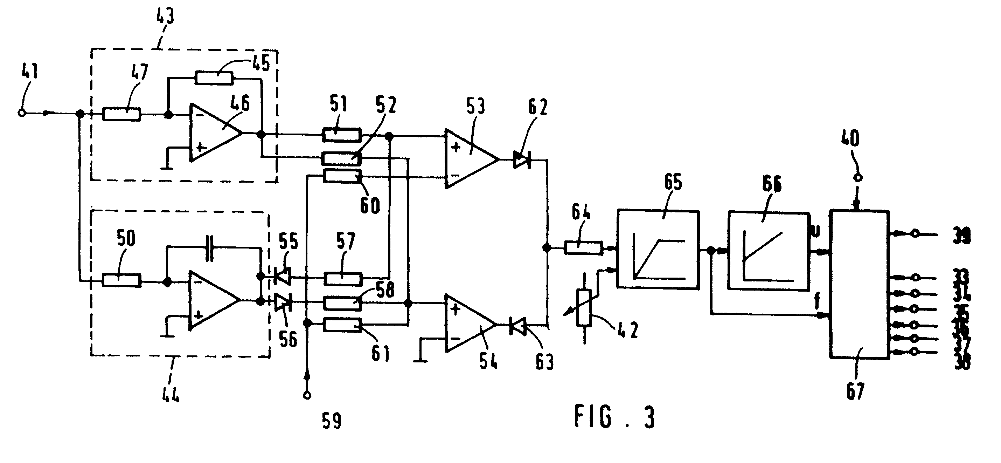

Eine elektronische Steuervorrichtung 32 steuert die Gate-Anschlüsse der Leistungstransistoren 14 bis 19, 30 über Ausgänge 33 bis 39. Einem Eingang 40 wird die am Glättungskondensator 13 anliegende gleichgerichtete Wechselspannung bzw. Gleichspannung und einem Eingang 41 die am Widerstand 28 abgefallene Spannung als Motorlastsignal zugeführt. Die elektronische Steuervorrichtung 32 kann als Mikrorechner ausgebildet oder durch eine Schaltung realisiert sein, wie sie in Fig. 3 dargestellt ist.

Die am Glättungskondensator 13 anliegende Gleichspannung wird durch die Transistoren 14 bis 19, die zusammen mit der elektronischen Steuervorrichtung 32 einen Drehstrom-Umrichter darstellen in einen Drehstrom einer veränderlichen Mittelfrequenz von beispielsweise 0 bis 400 Hz umgewandelt. Die Einstellung der Frequenz erfolgt dabei über einen als Potentiometer ausgebildeten Drehzahl-Stellungsgeber 42, der an die elektronische Steuervorrichtung 32 angeschlossen ist und in dieser auf einen Frequenzgenerator einwirkt, wie später noch näher erläutert wird. Die Erzeugung eines Drehstroms aus einem Gleichstrom durch pulsartiges Ansteuern von sechs Leistungstransistoren ist beispielsweise aus dem eingangs genannten Stand der Technik bekannt.

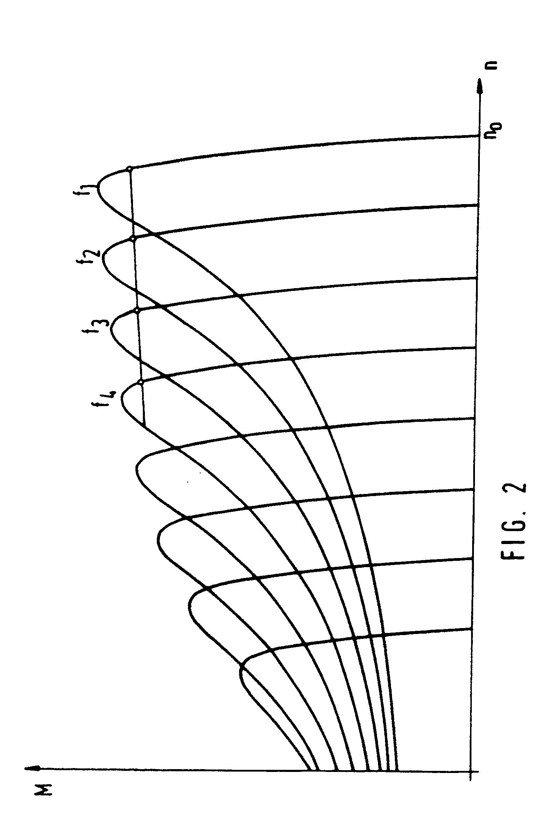

In Fig. 2 ist das Drehzahlverhalten der Drehzahl n eines Asynchronmotors in Abhängigkeit der Motorlast M bei verschiedenen Frequenzen f1, f2, f3, f4 ... dargestellt. Bei einer bestimmten Frequenz beginnt die Drehzahl eines derartigen Asychronmotors ab einem bestimmten Drehmoment steil abzufallen, wodurch eine Überhitzung und ein Abwürgen des Motors herbeigeführt wird. Durch kontinuierliches Anpassen der Frequenz (und entsprechend der Spannungsamplitude) kann dies verhindert werden und das Drehmoment des Motors über den gesamten Drehzahlbereich auf einem sehr hohen Wert gehalten werden, wie dies durch eine im wesentlichen waagrechte Linie dargestellt ist. Gleichzeitig wird ein hoher Wirkungsgrad des Antriebssystems erreicht und eine Überlastung vermieden. Die vom Netz aufgenommene Wirkleistung ist proportional dem Realteil des Ständerstromes, der dem Stromwert des gleichgerichteten Stromes des Umrichters entspricht. Die mechanisch abgegebene Leistung an der Motorwelle ist ebenfalls proportional dem Realteil des Läuferstromes, der wiederum proportional dem Realteil des Ständerstromes ist. Bekanntlich ergibt sich das Drehmoment als Produkt aus Luftspaltinduktion und Rotorstrombelag bzw. aus Fluß und Rotorstrom. Wird im Umrichter eine Frequenzänderung entsprechend einer vorgegebenen U/f-Kennlinie (U = Spannungsamplitude) vorgenommen, so reagiert der Asynchronmotor mit einer Stromerhöhung bis zum maximalen Strom, so daß die Drehzahländerung mit dem größtmöglichen Drehmoment erfolgt. Die Steuerung des Asynchronmotors 27 gemäß einer vorgegebenen Kennlinie wird anhand der in Fig. 3 angegebenen Schaltung noch näher erläutert.

Im generatorischen Betrieb des Asynchronmotors 7, der beispielsweise bei einer plötzlichen Verstellung des Drehzahl-Stellungsgebers 42 in Richtung niedrigerer Drehzahlen auftritt, speist der Asynchronmotor 27 Energie zurück, die sich als Spannungsanstieg am Glättungskondensator 13 äußert. Der im Normalbetrieb gesperrte Leistungstransistor 30 wird dann stromleitend geschaltet, so daß diese Energie über den Bremswiderstand 29 abfließen kann. Dies erfolgt am günstigsten über eine nicht näher dargestellt Regelung, d. h., die Spannung am Eingang 40 wird auf einen konstanten Wert geregelt, bei dessen Überschreitung der Leistungstransistor 30 getaktet in den stromleitenden Zustand versetzt wird. Neben der Verhinderung einer Überspannung wird hierdurch ein plötzliches Abbremsen des Asynchronmotors 27 ermöglicht, so daß bei einer Verstellung des Drehzahl-Stellungsgebers 42 sehr schnell der neu eingestellte Drehzahlwert erreicht wird.

Die gesamte, in Fig. 1 dargestellte Schaltung läßt sich vor allem bei einer Ausbildung der elektronischen Steuervorrichtung 32 durch einen Mikroprozessor in einem sehr kleinen Gehäuse unterbringen, das über die Klemmen 10 mit einem Netzkabel verbunden wird. An dieses Gehäuse können dann verschiedene, mit einem Asynchronmotor versehene Handwerkzeugmaschinen über die Steckverbindung 26 angeschlossen und betrieben werden.

Bei dem in Fig. 3 dargestellten Ausführungsbeispiel der elektronischen Steuervorrichtung 32 ist der das Motorlastsignal führende Eingang 41 sowohl mit einem Eingangsverstärker 43, wie auch mit einem Integrator 44 zur Erkennung der Stromflußrichtung durch den Widerstand 28 verbunden.

Der Eingangsverstärker 43 besteht aus einem über einen Widerstand 45 gegengekoppelten Operationsverstärker 46, dessen nicht-invertierender Eingang mit Masse und dessen invertierender Eingang über einen Eingangswiderstand 47 an den Eingang 41 angeschlossen ist.

Der Integrator 44 besteht aus einem über einem Kondensator 48 gegengekoppelten Operationsverstärker 49, der entsprechend dem Eingangsverstärker 43 mit einem Eingangswiderstand 50 beschaltet ist.

Das verstärkte Ausgangssignal des Eingangsverstärkers 43 ist über je einen Widerstand 51, 52 den nicht-invertierenden Eingängen zweier als Komparatoren geschalteter Operationsverstärker 53, 54 zugeführt. Der Ausgang des Integrators 44 ist über je eine Reihenschaltung einer Diode 55 bzw. 56 mit einem Widerstand 57 bzw. 58 ebenfalls an die nicht-invertierenden Eingänge der Operationsverstärker 53, 54 angeschlossen. Dabei sind die Dioden 55, 56 jeweils invers zueinander gepolt.

Eine mit einem einer vorgegebenen Spitzenlast entsprechenden Grenzwertsignal beaufschlagte Klemme 59 ist sowohl über einen Widerstand 60 mit dem invertierenden Eingang des Operationsverstärkers 53, wie auch über einen Widerstand 61 mit dem nicht-invertierenden Eingang des Operationsverstärkers 54 verbunden, dessen invertierender Eingang an Masse liegt.

Die Ausgänge der Operationsverstärker 53, 54 sind jeweils über invers zueinander gepolte Dioden 62, 63 und einen Widerstand 64 mit einem Eingang eines den Motoranlauf steuernden, als Integrator ausgebildeten Rampengenerator 65 verbunden. Dieser Rampengeber ist zusätzlich mit dem Signal des Drehzahl-Stellungsgebers 42 beaufschlagt. Das die Frequenz f für den Asynchronmotor 27 vorgebende Ausgangssignal des Rampengenerators 65 ist einmal direkt und einmal indirekt über einen Funktionsgenerator 66 mit einem Frequenzgenerator 67 verbunden, in dem eine Steuerfrequenz für den Asynchronmotor 27 in Abhängigkeit der anliegenden Steuersignale erzeugt wird. Diese Steuerfrequenz wird in der für einen Umrichter üblichen Weise pulsförmig über die sechs Ausgänge 33 bis 38 den sechs Steueranschlüssen der Leistungstransistoren 14 bis 19 zugeführt. Im Normalbetrieb, unter der durch das Grenzwertsignal an der Klemme 59 vorgegebenen Spitzenlast, sind durch die Dioden 62, 63 beide Ausgänge der Operationsverstärker 53, 54 gesperrt, so daß über den Widerstand 64 kein Einfluß auf den Betrieb des Asynchronmotors 27 ausgehen kann. Über den Drehzahl-Stellungsgeber 42 wird eine bestimmte Drehzahl n mittels des Steuersignals f vorgegeben. Dabei erfolgt über den Rampengenerator 65 zum Erzielen eines Sanftanlaufes ein allmähliches Ansteigen des Signals f bis zum vorgegebenen Wert. Im Funktionsgenerator 66 erfolgt nach einer vorgegebenen Kennlinie eine Zuordnung eines optimierten Amplitudenwertes U zu jedem Frequenzwert f. Dieser Amplitudenwert äussert sich als Impulsdauer der Steuersignale für die Leistungstransistoren 14 bis 19. Durch jede Stellung des Drehzahl-Stellungsgeber 42 wird somit ein definierter Frequenz- und ein definierter Amplitudenwert nach einer optimierten Kennlinie vorgegeben, so daß die in Fig. 2 angegebene Kennlinie sicher eingehalten und ein hoher Wirkungsgrad des Antriebssystems erreicht wird.

Steigt die Motorlast über den vorgegebenen Grenzwert an, so erfolgt über den Widerstand 64 ein Eingriff auf den durch den Drehzahl-Stellungsgeber 42 vorgegebenen Wert im Sinne einer Reduzierung der Frequenz, so daß eine Überlastung verhindert wird. Durch den Integrator 44 und die diesem nachgeschalteten, invers gepolten Dioden 55, 56 ist jeweils nur einer der beiden Operationsverstärker 53, 54 wirksam, wobei der eine motorisch und der andere im generatorischen Betrieb des Asynchronmotors 27 bei Erreichen der vorgegebenen Spitzenlast ein Ausgangssignal erzeugen kann. Durch die beiden entsprechenden Stromflußrichtungen durch den Widerstand 28 werden jeweils inverse Signale am Ausgang des Integrators 50 erzeugt. Durch die selbsttätige Absenkung und Anpassung der Ausgangsfrequenz bei Überschreiten der vorgegebenen Spitzenlast können Stromspitzen bei dynamischen Vorgängen, wie Anfahren, Abbremsen, plötzliches Belasten usw. keine schädliche Wirkung auf den Asynchronmotor 27 ausüben, wodurch jederzeit ein Betrieb mit einer höchstmöglichen Ausgangsleistung und höchstem Wirkungsgrad möglich ist. Auch Überlastspitzen im generatorischen Betrieb können so kompensiert werden, wobei dann der durch den Operationsverstärker 53 gebildete Komperator verriegelt und der Operationsverstärker 54 freigegeben ist.

Bei Auftreten einer Überlast werden somit die Spannungsamplitude und die Frequenz gemäß der vorgegebenen Kennlinie so lange reduziert, bis sich ein Gleichgewicht einstellt. Bei generatorischem Überstrom werden die Spannungsamplitude und die Frequenz entsprechend erhöht. Die Zeitkonstante dieses Spitzenlasteingriffs ist bezogen auf die Zeitkonstante des Asynchronmotors schnell genug, um auch dynamische Vorgänge sicher beherrschen zu können. Das im einfachsten Fall konstante Grenzwertsignal an der Klemme 59 kann auch als Funktion, z.B. als analoges Funktionsnetz vorgegeben werden, z.B. für eine Strom/Widerstands-Kompensation (IxRs-Kompensation), zur Anpassung im Bereich der Feldschwächung oder als Funktion weiterer Motorparameter. Bedingt durch Spannungsabfälle im Asynchronmotor sinkt bei konstantem Spannungsfrequenzverhältnis am Motor des verfügbare Drehmoment bei kleinen Frequenzen unter das Nennmoment ab. Soll auch in diesem Bereich das volle Nennmoment zur Verfügung stehen, so ist die U/f-Kennlinie in diesem Bereich entsprechend anzuheben (IxRs-Kompensation). Der Feldschwächbetrieb ergibt sich durch Erhöhung der Frequenz über die Motornennfrequenz hinaus. Da die maximale Ausgangsspannung bereits erreicht ist, nimmt der Motorfluß und damit das Motornennmoment ab. Auch hier ist eine entsprechende Kompensation möglich.

## Patentansprüche

1.   Stromversorgungseinrichtung für von einem Asynchronmotor (27) angetriebene Elektrowerkzeuge, mit einem eine gleichgerichtete Wechselspannung in einen Drehstrom variabler Frequenz und Spannungsamplitude umsetzenden, einen Frequenzgenerator enthaltenden Umrichter, mit einem auf den Frequenzgenerator einwirkenden Drehzahl-Stellungsgeber (42), wobei ein die Motorlast erfassender Lastsensor (28) mit dem Frequenzgenerator bei Überschreitung wenigstens eines, einer Spitzenlast entsprechenden, vorgegebenen Grenzwertes in Wirkverbindung steht, dadurch gekennzeichnet, daß durch die Stellung des Drehzal-Stellungsgebers (42) definierte in einer festen Zuordnung zueinander stehende Frequenz- und Spannungsamplitudenwerte nach einer vorgegebenen Kennlinie einstellbar sind und daß, bei Überschreitung des Lastgrenzwertes ein Eingriff der Motorlast über den Lastsensor (28) auf den Arbeitspunkt der Kennlinie im Sinne einer Reduzierung der Frequenz und Spannung erfolgt.

2. Einrichtung nach Anspruch 1, dadurch gekennzeichnet, daß zur Vorgabe der Kennlinie dem Frequenzgenerator (67) ein Funktionsgenerator (66) vorgeschaltet ist, in dem eine vorgegebene Funktion der Amplitude (U) von der Frequenz (f) erzeugt wird.

3. Einrichtung nach einem der vorhergehenden Ansprüche, dadurch gekennzeichnet, daß dem Drehzahl-Stellungsgeber (42) ein den Motoranlauf steuernder, insbesondere als Integrator ausgebildeter Rampengenerator (65) nachgeschaltet ist.

4. Einrichtung nach einem der vorhergehenden Ansprüche, dadurch gekennzeichnet, daß zwischen dem Lastsensor (28) und dem Frequenzgenerator (67) wenigstens eine vor Erreichen des Grenzwertes gesperrte Schwellwertstufe (53, 54) geschaltet ist.

5. Einrichtung nach Anspruch 4, dadurch gekennzeichnet, daß die wenigstens eine Schwellwertstufe (53, 54) einen das Signal des Lastsensors mit dem jeweiligen Grenzwert vergleichenden Komparator aufweist, dessen Ausgang für Signale einer Polarität gesperrt ist.

6. Einrichtung nach Anspruch 4 oder 5, dadurch gekennzeichnet, daß eine Schwellwertstufe (53) für einen oberen positiven Grenzwert und eine zweite Schwellwertstufe (54) für einen unteren negativen, im Bremsbetrieb erreichbaren Grenzwert vorgesehen ist.

7. Einrichtung nach einem der vorhergehenden Ansprüche, dadurch gekennzeichnet, daß der Lastsensor (28) als Stromsensor, insbesondere als Widerstand im gleichgerichteten Stromkreis ausgebildet ist.

8. Einrichtung nach Anspruch 6 oder 7, dadurch gekennzeichnet, daß eine in Abhängigkeit der Flußrichtung des gleichgerichteten Stromes umschaltende Schaltvorrichtung (44) vorgesehen ist, die alternativ eine der beiden Schwellwertstufen (53, 54) sperrt.

9. Einrichtung nach Anspruch 8, dadurch gekennzeichnet, daß die Schaltvorrichtung (44) als Integrator ausgebildet ist, dessen Ausgang über invers gepolte Dioden (55, 56) mit den Schwellwertstufen (53, 54) verbunden ist.

10. Einrichtung nach einem der Ansprüche 4 bis 9, dadurch gekennzeichnet, daß der Ausgang der wenigstens einen Schwellwertstufe (53, 54) verändernd auf das Drehzahl-Stellungssignal eingreift, insbesondere mit dem Ausgang des Drehzahl-Stellungsgebers (42) verknüpft ist.

11. Einrichtung nach einem der vorhergehenden Ansprüche, dadurch gekennzeichnet, daß der jeweilige Grenzwert ein Festwert oder eine Funktion eines Motor- oder sonstigen Parameters ist.

12. Einrichtung nach einem der vorhergehenden Ansprüche, dadurch gekennzeichnet, daß der Umrichter in den gleichgerichteten Stromkreis geschaltete, den drei Anschlüssen des Asynchronmotors (27) zugeordnete, vom Frequenzgenerator (67) gesteuerte Transistor-Schaltendstufen (14 bis 19) aufweist.

13. Einrichtung nach Anspruch 12, dadurch gekennzeichnet, daß ein zwischen die Pole des gleichgerichteten Stromkreises geschalteter Halbleiterschalter (30) mit vorzugsweise dazu in Reihe geschaltetem Bremswiderstand (29) vorgesehen ist, der bei Überschreitung einer vorgegebenen Spannung im generatorischen Bereich des Asynchronmotors (27) in den stromleitenden Zustand versetzbar ist.

14. Einrichtung nach Anspruch 13, dadurch gekennzeichnet, daß eine Regelvorrichtung vorgesehen ist, durch die die Spannung an diesen Polen auf einen maximalen, vorgegebenen Wert durch getaktetes Ansteuern des Halbleiterschalters (30) begrenzt wird.

## Claims

1. Power supply equipment for electric tools driven by an asynchronous motor (27), with a converter containing a frequency generator transforming a rectified alternating voltage into a three-phase current of variable frequency and voltage amplitude, with a speed sensor (42) acting on the frequency generator, and with a load sensor (28) in active contact with the frequency generator detecting the motor loading when at least one preset limit value corresponding to a peak load is exceeded, characterized in that, through the position of the speed sensor (42), defined frequency and voltage amplitude values in a fixed relationship to one another can be adjusted in accordance with a preset characteristic curve and that, if the load limit value is exceeded, the motor loading affects the operating point of the curve via the load sensor (28) effecting a reduction of frequency and voltage.

2. Equipment according to claim 1, characterized in that, to preset the characteristic curve a function generator (66), in which a preset function of the amplitude (U) is generated by the frequency (f), is connected before the frequency generator (67).

3. Equipment according to any of the preceding claims, characterized in that a ramp generator (65) controlling the motor starting, in particular in the form of an integrator, is connected after the speed sensor (42).

4. Equipment according to any of the preceding claims, characterized in that at least one threshold stage (53, 54) blocked before reaching the limit value, is connected between the load sensor (28) and the frequency generator (67).

5. Equipment according to claim 4, characterized in that at least one threshold stage (53, 54) has a comparator comparing the signal of the load sensor with the respective limit value, with the output of the comparator blocked for signals of one polarity.

6. Equipment according to claims 4 or 5, characterized in that one threshold stage (53) is provided for an upper positive limit value, and a second threshold stage (54) is provided for a lower negative limit value achievable in braking operation.

7. Equipment according to any of the preceding claims, characterized in that the load sensor (28) is designed as a current sensor, in particular as a resistor in the rectified circuit.

8. Equipment according to claims 6 or 7, characterized in that a switching device (44) switching over depending on the direction of flux of the rectified current is provided, which alternately blocks one of the two threshold stages (53, 54).

9. Equipment according to claim 8, characterized in that the switching device (44) is designed as an integrator, the output of which is connected to the threshold stages (53, 54) via inversely-poled diodes (55, 56).

10. Equipment according to any of claims 4 to 9, characterized in that the output of at least one threshold stage (53, 54) changes the speed sensor signal, and in particular is linked to the output of the speed sensor (42).

11. Equipment according to any of the preceding claims, characterized in that the respective limit value is a fixed value or a function of a motor or other parameter.

12. Equipment according to any of the preceding claims, characterized in that the converter has transistor switching output stages (14 to 19) controlled by the frequency generator (67), connected in the rectified circuit, assigned to the three connections of the asynchronous motor (27).

13. Equipment according to claim 12, characterized in that, connected between the poles of the rectified circuit is a semiconductor switch (20), preferably with a braking resistor (29) connected in series, which can be made conductive if a preset voltage in the generation part of the asynchronous motor (27) is exceeded.

14. Equipment according to claim 13, characterized in that there is a control device by means of which the voltage at these poles is limited to a maximum preset value by fixed-cycle activation of the semiconductor switch (30).

**Revendications**

1. Dispositif d'alimentation en courant électrique pour outils électriques entraînés par moteur asynchrone, avec un mutateur, assurant une conversion d'une tension alternative redressée en un courant alternatif à fréquence et amplitude de tension variables et contenant un générateur de fréquence, avec un capteur de déplacement de vitesse de rotation (42) qui agit sur le générateur de fréquence, où un capteur de charge (28) mesurant la charge moteur est relié fonctionnellement au générateur de fréquence, en cas de dépassement d'au moins une valeur limite prédéterminée, correspondant à une charge de pointe, caractérisé en ce que, suite au positionnement du capteur de déplacement de vitesse de rotation (42), il est possible de régler, suivant une caractéristique prédéterminée, les valeurs de fréquence et d'amplitude de tension, reliées entre elles suivant une association fixe, et qu'en cas de dépassement des valeurs limites de charge, il s'effectue une action sur la charge moteur, par l'intermédiaire du capteur de charge (28), sur le point de travail de la caractéristique, au sens d'une réduction de la fréquence et de la tension.

2. Dispositif selon la revendication 1, caractérisé en ce qu'un générateur de fonction (66), dans lequel est produite une fonction prédéterminée de l'amplitude (U) par rapport à la fréquence (f), est mis en circuit en amont, en vue d'allouer sa caractéristique au générateur de fréquence (67).

3. Dispositif selon l'une des revendications précédentes, caractérisé en ce qu'un générateur de rampe (65), en particulier sous forme de générateur de rampe se présentant sous forme d'un intégrateur (65), est mis en circuit en aval du capteur de déplacement de vitesse de rotation (42), en vue de commander le démarrage du moteur.

4. Dispositif selon l'une des revendications précédentes, caractérisé en ce qu'au moins un étage à valeur de seuil (53,54), bloqué avant que la valeur limite soit atteinte, est mis en circuit entre le capteur de charge (28) et le générateur de fréquence (67).

5. Dispositif selon la revendication 4, caractérisé en ce que le au moins un étage à valeur de seuil (53,54) présente un comparateur, qui compare le signal du capteur de charge et la valeur limite respective et dont la sortie est bloquée pour des signaux d'une certaine polarité.

6. Dispositif selon la revendication 4 ou 5, caractérisé en ce qu'un premier étage à valeur de seuil (53) est prévu pour une valeur limite supérieure positive et un deuxième étage à valeur de seuil (54) est prévu pour une valeur limite inférieure négative, susceptible d'être atteinte lors d'un fonctionnement en freinage.

7. Dispositif selon l'une des revendications précédentes, caractérisé en ce que le capteur de charge (28) est réalisé sous forme de capteur d'intensité, en particulier sous forme de résistance, dans un circuit électrique redressé.

8. Dispositif selon la revendication 6 ou 7, caractérisé en ce qu'est prévu un dispositif de commutation (44), qui assure la commutation en fonction du sens de passage du courant redressé et bloque alternativement l'un des deux etages à valeur de seuil (53,54).

9. Dispositif selon la revendication 8, caractérisé en ce que le dispositif de commutation (44) est réalisé sous forme d'intégrateur, dont la sortie est reliée aux étages à valeur de seuil (53,54), par l'intermédiaire de diodes à polarités inverses (55,56).

10. Dispositif selon l'une des revendications 4 à 9, caractérisé en ce que la sortie du au moins un étage à valeur de seuil (53,54) agit de façon à modifier le signal de position de vitesse de rotation, en particulier en étant combiné logiquement à la sortie du capteur de déplacement de vitesse de rotation (42).

11. Dispositif selon l'une des revendications précédentes, caractérisé en ce que la valeur limite respective est une valeur fixe ou une fonction d'un paramètre de moteur ou autre.

12. Dispositif selon l'une des revendications précédentes, caractérisé en ce que le mutateur présente un étage final de commutation à transistor (14 à 19), mis en circuit dans le circuit électrique redressé, associé aux trois raccordements du moteur asynchrone (27), commandé par le générateur de fréquence (67).

13. Dispositif selon la revendication 12, caractérisé en ce qu'est prévu un interrupteur à semi-conducteur (30), mis en circuit entre les pôles du circuit électrique redressé, avec de préférence des résistances de freinage (29) branchées en série avec lui, qui est susceptible de produire un passage à l'état passant, en cas de dépassement d'une tension prédéterminée dans la plage de fonctionnement en générateur du moteur asynchrone (27).

14. Dispositif selon la revendication 1, caractérisé en ce qu'est prévu un dispositif de régulation, grâce auquel la tension sur ces pôles est limitée à une valeur maximale prédéterminée, par une commande cadencée de l'interrupteur à semi-conducteur (30).

FIG. 1

EP 0 283 945 B1

EP 0 283 945 B1

FIG. 2

FIG. 3